# EUROPÄISCHE PATENTSCHRIFT

(11) **EP 4 285 107 B1**
(45) Veröffentlichungstag und Bekanntmachung des Hinweises auf die Patenterteilung: **22.10.2025**
(21) Anmeldenummer: 22701269.7
(22) Anmeldetag: 13.01.2022
(51) Int. Cl.: G01N 21/88

(54) **OBERFLÄCHENKONTROLL- ODER FARBABMUSTERUNGSLEUCHTE**
SURFACE CONTROL LIGHT OR COLOUR MATCH LIGHT
LUMIÈRE DE CONTRÔLE DE SURFACE OU LUMIÈRE D'ADAPTATION DE COULEUR

(30) Priorität: 27.01.2021 DE 102021101748
(43) Veröffentlichungstag der Anmeldung: 06.12.2023
(73) Patentinhaber: Oligo Lichttechnik GmbH, 53757 St. Augustin (DE)
(72) Erfinder: KASTEN, Felix, 19309 Lanz OT Gadow (DE)
(74) Vertreter: Castell, Klaus
(86) Internationale Anmeldenummer: PCT/IB2022/050228
(87) Internationale Veröffentlichungsnummer: WO 2022/162483

(56) Entgegenhaltungen:
- DE-A1- 19 519 777
- JP-A- 2004 191 070

## Beschreibung

Die Erfindung betrifft eine Oberflächenkontroll- oder Farbabmusterungsleuchte aufweisend einen kastenförmigen Behälter als Gehäuseteil zur Aufnahme von Lampen und/oder modulförmigen Lampenanordnungen, wobei die Lampen und/oder die modulförmigen Lampenanordnungen gleichmäßig in einer Fläche des kastenförmigen Behälters angeordnet sind, eine rahmenförmige Tür, welche den kastenförmigen Behälter verschließt, und eine Mattscheibe aufnimmt, durch welche die Lampen und/oder modulförmigen Lampenanordnungen hindurchscheinen.

Die Qualitätskontrolle von Oberflächen, speziell die Qualitätskontrolle von gekrümmten Oberflächen von Fahrzeugkarosserien ist bis heute ein Prozess, der nur durch den Menschen und nicht maschinell in befriedigender Weise durchgeführt werden kann. Bei der Kontrolle von einzelnen Karosserieteilen oder des fertigen Fahrzeuges werden die Auswirkungen der unterschiedlichen Produktionsprozesse erkennbar. Der Fachmann ist in der Lage, zu erkennen, ob die Karosseriepresse die erwünschte Form presst, ob die Form der Karosserie zu Formfehlern aufgrund thermisch bedingter, mechanischer Spannungen neigt und ob Lunker oder Störstellen im Stahlblech der kaltverformten Karosseriebleche vorhanden sind. Schließlich kann der Fachmann bei der Qualitätskontrolle den Prozess der mehrlagigen Lackierung prüfen. Das Karosserieteil wird zunächst durch eine Phosphatierung grundiert. Variiert die Schichtdicke der Phosphatierung über die großflächige Oberfläche des Karosserieteils, so können geringfügige Formfehler in der Karosseriewölbung entstehen. Das Fließverhalten der noch flüssigen Tauchlackierung kann beim Abfließen nach dem Tauchen in die viskose Tauchlackierung zu Schichtdickenunterschieden zwischen beim Abfließen höher und tiefer angeordneten Bauteilen führen. Schließlich ist die gleichmäßige Beschaffenheit der weiteren Grundierung ursächlich für einen gleichmäßigen Lackauftrag. Der Lack selber kann bei mehrschichtigen Lackierungen eine Vielzahl von optisch erkennbaren Unterschieden aufweisen, wie ein unterschiedliches Reflexionsverhalten gegenüber diffusem Umgebungslicht und brillantem Spitzlicht. Des Weiteren können typische Polierspuren zu hologrammähnlichen Störstellen im Lack führen, die optisch unerwünschte Störstellen erzeugen. Des Weiteren kann die Oberflächenbeschaffenheit von heute in der Produktion üblichen Wasserlacken, die beim Aushärten zu einer erwünschten orangenhautähnlichen Struktur führen, geringfügige Produktionsfehler kaschieren, wie zum Beispiel beim Tauchgrundieren auf der Oberfläche verbliebene und in den aushärtenden Lack eingeschlossene Splitterstücke oder über die große Fläche ungleichmäßig stark aufgetragene oder ungleichmäßig ausgehärtete Lackstellen. Neben den hier geschilderten möglichen Fehlerquellen kennt der mit dem Karosseriebau betraute Fachmann eine große weitere Vielzahl von Produktionsfehlern oder deren Artefakte. In der Qualitätskontrolle werden daher Nuanceure, Karosseriebauingenieure, Metallographen, Lackierer, Chemiker und Verfahrenstechniker eingesetzt, welche mögliche Fehlerquellen der ihnen angetrauten Produktionsprozesse im Detail kennen und diese bei der Qualitätskontrolle erkennen können. Erstaunlicherweise finden menschliche Oberflächenkontrolleure zwar weniger Fehler als es eine automatisierte Kamera mit Spektralauflösung kann, jedoch sind die Fehler, die durch einen menschlichen Oberflächenkontrolleur gefunden werden, andere Oberflächenfehler als die von einem automatisierten System gefunden werden. Bei der Oberflächenkontrolle spielen auch die Eigenheiten des menschlichen Sehens eine Rolle.

Für die optische Untersuchung der gekrümmten Karosserieoberflächen ist es wichtig, dass eine Lichtquelle mit über die Zeit konstanter Helligkeit und Lichtverteilung vorhanden ist, mit der die Qualitätskontrolle durchgeführt wird. Der Fachmann hat zum Teil sehr hohe Anforderungen an die Art und die Qualität der Lichtquelle, um die zum Teil durch die Art der Lackierung kaschierten produktionsbedingten Abweichungen der Oberflächenbeschaffenheit vom Idealzustand überhaupt erkennen zu können. Zum einen ist es wichtig, dass das Prüflicht von der Lichtquelle unter einem sehr großen Winkel gleichmäßig abgestrahlt wird. Das Prüflicht soll ein reproduzierbares Spektrum und damit eine vorbestimmte Farbe aufweisen. Außerdem soll der Farbwiedergabeindex bestimmten Qualitätsanforderungen genügen. Das Verhältnis von diffusen Lichtanteilen zu Brillanz der Lichtquelle soll ebenfalls reproduzierbar sein und sich nach Möglichkeit über den Lebenszyklus der Prüfleuchte und auch zwischen verschiedenen Prüfleuchten nicht ändern. Das Verhältnis von polarisiertem Licht zu nicht polarisiertem Licht des Prüflichtes, ausgedrückt als Stokes-Vektor, soll je nach Einsatzart entweder sehr stark ausgeprägt sein oder im anderen Extremfall soll gar kein polarisiertes Licht vorhanden sein. Schließlich sollen für die Prüfung der Oberfläche herangezogene Prüfmuster in der Lichtquelle so beschaffen sein, dass die Augen des Qualitätsprüfers nicht übermäßig stark durch variierende Hell-Dunkel-Kontraste belastet werden, was hilft, ermüdungsbedingte Kontrollfehler zu vermeiden.

In einem Fahrzeugwerk wird die Oberfläche der lackierten Karosserie eine produzierten Fahrzeugs in Oberflächenkontrolltunneln geprüft. Der Oberflächenkontrolltunnel ist an den Wänden bis zum Boden mit Leuchten ausgestattet und auch an der Decke. Oberflächenkontrolltunnel dieser Art können Längen von bis zu 270 m aufweisen. Die schiere Menge an Oberflächenkontrollleuchten in solchen industriellen Tunneln erzeugen eine sehr erhebliche Abwärme, die klimatisiert werden muss, um die Arbeitsbedingungen der Oberflächenkontrolleure, die in den Oberflächenkontrolltunneln arbeiten, erträglich zu halten. Des Weiteren ist es notwendig, dass die Oberflächenkontrollleuchten die Oberflächenkontrolleure nicht gefährden. Eine Gefährdung kann ausgehen von Glasbruch. Glasbruch kann vielfältige Ursachen haben. Neben seltenen spontanen Glasbrüchen können insbesondere Unfälle bei Montagearbeiten dazu führen, dass die Glasoberflächen der Oberflächenkontrollleuchten bersten. Sind keine Schutzmaßnahmen ergriffen worden, so würden Scherben auf die unter den Oberflächenkontrollleuchten arbeitenden Menschen fallen und diese schwer verletzen. An Oberflächenkontrollleuchten werden also verschiedene Anforderungen gestellt. Sie müssen zunächst besonders gleichmäßig über ihre Oberfläche leuchten. Sie sollten eine möglichst geringe Abwärme erzeugen. Schließlich müssen die Glasflächen vor Bruch geschützt werden. Ein noch weiterer und wesentlicher Aspekt ist der Preis, da die Oberflächenkontrollleuchten in großer Zahl eingesetzt werden.

Ein weiter Einsatz von Leuchten der zuvor beschriebenen Art sind Farbabmusterungsleuchten in entsprechenden Farbabmusterungskabinen. Farbabmusterungsleuchten für keine Gegenstände werden typischerweise in kleinen Kästen oder Kabinen installiert, in welche die Gegenstände zur Farbabmusterung hineingelegt werden. Zur Farbabmusterung von Kraftfahrzeugen ist es notwendig, das gesamte Fahrzeug in eine solche Kabine hineinzufahren, so dass diese Kabine eher ein eigener Farbabmusterungsraum oder gar eine Farbabmusterungshalle ist. Um eine gleichmäßige Beleuchtung mit gleichmäßiger Intensität aus allen Richtungen zu erzeugen, sind in einer typische Halle zur Farbabmusterung von Kraftfahrzeugen nicht selten 70 solcher Leuchten oder mehr installiert. Diese Leuchten erzeugen trotz des Einsatzes von LED eine sehr erhebliche Abwärme, welche durch Klimaanlagen abgeführt werden muss, um die in der Farbabmusterungshalle herrschenden Arbeitsbedingungen erträglich zu machen. Anders als in Farbabmusterungstunneln, die offen gestaltet sind, sind Farbabmusterungsleuchten zur Vermeidung des Einfalls von Falschlicht in der Regel abgeschlossen. Eine hohe Lichtausbeute bei gleichzeitig geringer Abwärme ist hier wünschenswert.

In der japanischen Patentanmeldung JP 2004 191070 A wird ein Lichtkasten zum Erzeugen eines Streifenmusters offenbart. Diese Streifenmusterleuchten werden in der Autoindustrie dazu genutzt, Oberflächenkonturen von Karosserien nach konvexen oder konkaven Fehlern abzusuchen. Ein Farbtreue und auch eine besonders gleichmäßige Ausleuchtung ist bei diesen Lampen nicht zwingend notwendig.

In der deutschen Offenlegungsschrift DE 195 19 777 A wird eine Oberflächenkontrolleichte mit Leuchtstoffröhren offenbart, in der Reflektoren mit einer Kegelschnittkontur vorhanden sind, die an die Mattscheibe heranragen. Zwischen einzelnen Reflektoren ist ein Streifenmuster angeordnet, das zur Prüfung von Konturfehlern verwendet wird.

Aufgabe der Erfindung ist es daher, eine Oberflächenkontroll- oder Farbabmusterungsleuchte zur Verfügung zu stellen, welche wirtschaftlich zu fertigen ist, weniger Abwärme erzeugt als bestehende Oberflächenkontrollleuchten, die unempfindlich ist gegenüber Bedingungen in industriellen Fertigungshallen und welche sehr gleichmäßig ausgeleuchtet ist.

Die erfindungsgemäße Aufgabe wird dadurch gelöst, dass die Mattscheibe aus zwei aneinanderliegenden Scheiben besteht, wobei eine erste Scheibe eine mattierte Oberfläche aufweist, welche in Richtung der zweiten Scheibe weist, wobei die mattierte Oberfläche der ersten Scheibe eine nicht mattierte Oberfläche der zweiten Scheibe unmittelbar berührt, und wobei die erste Scheibe zur Innenseite des kastenförmigen Behälters eine glatte, nicht mattierte Klarsichtseite aufweist. Weitere vorteilhafte Ausgestaltungen sind in den Unteransprüchen zu Anspruch 1 angegeben.

Diese Anordnung innerhalb der Mattscheibe, die aus zwei unterschiedlichen Scheiben besteht, nämlich aus einer auf einer Oberfläche mattierten Scheibe und einer weiteren Scheibe als Schutzscheibe, führt zu verschiedenen voneinander unabhängigen Effekten.

Zunächst ist ein überraschender Effekt, dass der Lichtverlust beim Durchdringen von Licht durch die Mattscheibe um etwa 5% geringer ist als bei einer Anordnung, in der die mattierte Seite auf einer nach außen weisenden Seite angeordnet ist. Durch diese erhöhte Lichtausbeute kann die Oberflächenkontroll- oder Farbabmusterungsleuchte mit geringerer elektrischer Leistung betrieben werden. Durch die geringere Leistung wird weniger Abwärme produziert, was wiederum zur Folge hat, dass eine Klimatisierung mit weniger Leistung stattfinden muss, um die Arbeitsbedingungen im erträglichen Maß zu halten. Die schon geringfügig erhöhte Lichtausbeute hat eine Vielzahl weiterer, geringerer Leistungsanforderungen zur Folge, wodurch nicht nur Primärenergie gespart wird. Die Arbeitsbedingungen verbessern sich dadurch auch, denn die Strahlungswärme ist geringer und die Windgeschwindigkeit in Oberflächenkontrolltunneln durch weniger Klimatisierung ist geringer.

Ein weiterer überraschender Effekt ist, dass der Delta E-Wert, der den Abstand zweier Farborte als sogenannten "Farbabstand" beschreibt, hier der Unterschied zwischen den Farborten der LED ohne Mattscheibe und mit installierter Mattscheibe, durch diese Anordnung geringer ausfällt. In der Norm EN ISO 11664-4 wird der Begriff "Farbabstand" genau definiert. Gegenüber dem "Farbunterschied" steht der "Farbabstand" für die quantifizierte Form des Unterschieds zweier Farben. Jeder real auftretenden Farbe, auch jeder von einem Geräte abgegebenen oder gemessenen Farbe, lässt sich in einem dreidimensionalen Raum ein Farbort zuordnen. Diese Möglichkeit ist im Graßmannschen Gesetz begründet. Der Wert von Delta E zwischen zwei Farborten (L*, a*, b*)p und (L*, a*, b*)_{V} wird nach EN ISO 11664-4 als euklidischer Abstand berechnet. Die Anordnung der mattierten Scheibe und der Schutzscheibe verringert also die Farbverfälschung gegenüber einer Anordnung mit einer zur LED weisenden Satinierung als Mattscheibe.

Die Anordnung der mattierten Scheibe und der Schutzscheibe hat auch zur Folge, dass die Mattierung nicht durch industrielle Fertigungsbedingungen beeinträchtigt wird. Zunächst wird ein Eintrag von Schmutz durch Insekten vermieden. Geringfügiger Partikel- und Sekreteintrag durch Insekten ist auf einer Klarsichtscheibe kaum sichtbar. Auf einer Mattscheibe hingegen, sind schon geringe Sektreteinträge durch Insekten als dunkle Flecken sofort erkennbar. Auch wird vermieden, dass in industriellen Fertigungshallen gelegentlich ungewollt in die Luft freigesetzte Öl-Aerosole auf den Scheiben kondensieren und als Flecken erkennbar sind. Die mattierte Schicht der mattierten Scheibe altert mithin langsamer. Die Doppelscheiben-Anordnung ermöglicht, dass die nach Außen gewandte Scheibe eine Schutzscheibe ist, die beispielsweise aus Acryl bestehen kann, oder aus einem Sicherheitsglas, das verhindert, dass Glas bei einem Unfall auf den Boden und auch auf unterhalb der Oberflächenkontrollleichten arbeitende Menschen fällt.

Erfindungsgemäß ist die Mattscheibe so aufgebaut, dass die mattierte Oberfläche der ersten Scheibe eine nicht mattierte Oberfläche der zweiten Scheibe unmittelbar berührt. Durch die unmittelbare Berührung finden weniger die Lichtausbeute verringernde Streuungen statt. Die mattierte Oberfläche wird vor Umwelteinflüssen geschützt. Das Besondere an dieser Anordnung ist, dass die nach Innen zur Berührung weisende Mattierung die Ausbildung von störenden Newton'schen Ringen unterdrückt. Zur Innenseite weist die erste Scheibe des kastenförmigen Behälters eine glatte, nicht mattierte Klarsichtseite auf. Diese ist weniger empfindlich gegenüber Verschmutzung.

Als ideale Mattierung hat sich eine Mattierung herausgestellt, die einen Mittenrauwert Rₐ von weniger als 1 µm aufweist. Bei gröberen Mattierungen entstehen Spitzlichter, die bei der Oberflächenkontrolle stören könnten.

Um die Mattscheibe möglichst gleichmäßig zu beleuchten, ist es vorteilhaft, wenn die Lampen und/oder modulförmigen Lampenanordnungen in einer Entfernung von weniger als 20 cm, bevorzugt zwischen 10 cm und 20 cm hinter der Mattscheibe angeordnet sind. Diese Anordnung kann begleitet sein von Abmessungen, in der die Breite der Mattscheibe zwischen 25 cm und 1 m aufweist und die Höhe der Mattscheibe zwischen 0,5 m und 2 m aufweist.

Um das Licht an zu untersuchende Oberflächen anzupassen, kann vorgesehen sein, dass die Lampen und/oder modulförmigen Lampenanordnungen einen einstellbaren Weißpunkt zwischen 2.700 K und 6.500 K aufweisen. Derartige Lampenanordnungen werden zum Zeitpunkt dieser Patentanmeldung in den Medien mit "Tunable White" bezeichnet. Dabei steht dieser Begriff jedoch nicht zwingend für die Güte des Weißlichtes, denn Weißlicht mit unterschiedlicher Farbtemperatur kann mit nur zwei unterschiedlichen LED erzeugt werden oder aber durch eine Mehrzahl von LED mit unterschiedlicher Farbe.

Um die Oberflächenkontroll- oder Farbabmusterungsleuchte zu kühlen, kann ein Kühlgebläse in den Seiten des kastenförmigen Behälters angeordnet sein. Da das Kühlgebläse Umgebungsluft in die Oberflächenkontroll- oder Farbabmusterungsleuchte befördert, befördert das Kühlgebläse auch Öl-Aerosole, Licht und Insekten in das Innere der Oberflächenkontrollleuchte. Dadurch, dass die mattierte Seite durch die zweite Scheibe vor der mattierten Seite der ersten Scheibe abgedeckt ist, wird die Oberflächenkontroll- oder Farbabmusterungsleuchte weniger empfindlich gegenüber Umwelteinflüssen. Um überflüssige Reflexe und Abbildungen bei der Oberflächenanalyse zu unterdrücken, kann es vorgesehen sein, dass die rahmenförmige Tür ohne äußerlich erkennbaren Verschluss ausgebildet ist. Der Türverschluss kann magnetisch ausgeführt sein oder aber Verschlusselemente befinden sich ausschließlich in den Seitenwänden des kastenförmigen Behälters als Gehäuseteil.

Die Erfindung wird anhand der folgenden Figuren näher erläutert. Es zeigt:
- Fig. 1: eine erfindungsgemäße Oberflächenkontroll- oder Farbabmusterungsleuchte in einer perspektivischen Darstellung,
- Fig. 2: eine Mattscheibenanordnung aus dem STAND DER TECHNIK,
- Fig. 3: eine Darstellung des optischen Phänomens der Newton'schen Ringe,
- Fig. 4: eine Mattscheibenanordnung der erfindungsgemäßen Oberflächenkontrollleuchte.

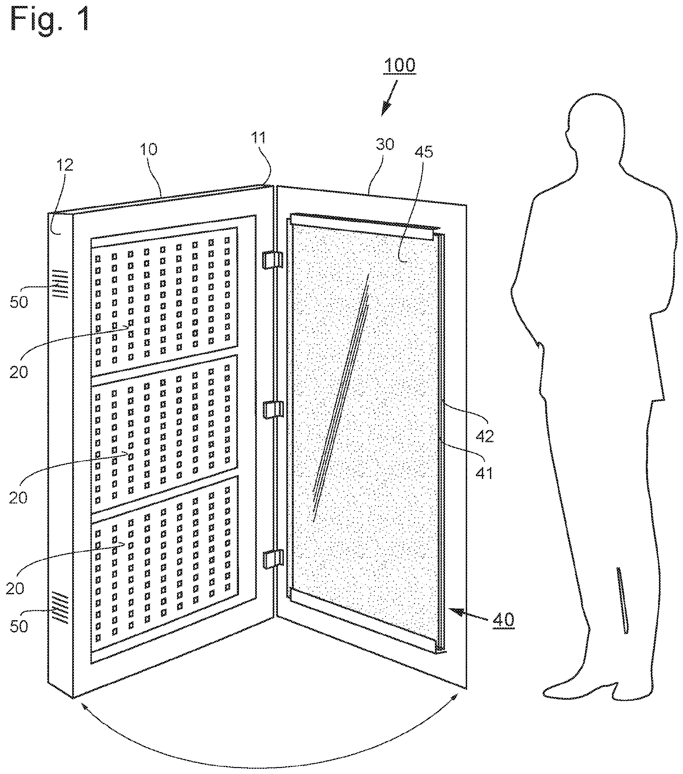

In Figur 1 ist eine erfindungsgemäße Oberflächenkontroll- oder Farbabmusterungsleuchte 100 in einer perspektivischen Darstellung skizziert. Die Oberflächenkontroll- oder Farbabmusterungsleuchte 100 besteht aus verschiedenen, zusammengesetzten Einzelteilen. Diese sind ein kastenförmigen Behälter 10 zur Aufnahme von Lampen und/oder modulförmigen Lampenanordnungen 20 als ein erstes Gehäuseteil. Dabei können die Lampen als einzelne Lampen in dem kastenförmigen Behälter 10 als Gehäuse installiert sein oder es ist möglich, dass mehr als eine Lampe auf einem Modul als modulförmige Lampenanordnung 20 zusammengeschaltet sind. Die Lampen bestehen in vorteilhafter Wiese aus einzelnen LED. Dazu können unterschiedliche LED mit einem Weißfarbton, beispielsweise eine LED mit einem Weißfarbton von 2.700 K und eine LED mit einem Weißfarbton von 6.500 K unmittelbar benachbart angeordnet sein. Es ist aber auch möglich, sogenannte COB (Chip-On-Board) LED einzusetzen. COB LEDs können eine Mehrzahl von unterschiedlichen LED auf einem Chip in sehr kleiner Bauform integrieren und durch individuelle Ansteuerung der Leistung können diese COB-LED farbiges oder Weißlicht mit unterschiedlichem Weißton sehr nahe am farblichen Weißpunkt eines idealen schwarzen Strahlers mit unterschiedlicher Temperatur gehalten werden. Um eine möglichst gleichmäßige Ausleuchtung der Fläche zu erreichen, sind die LED in dem kastenförmigen Behälter 10 möglichst gleichmäßig in der Fläche mit möglichst gleichem Abstand von der Mattscheibe 40 verteilt. Die zuvor genannte Mattscheibe 40 ist in einer Tür 30 aufgenommen. Dazu ist die Tür 30 als weiteres Gehäuseteil rahmenförmig, also wie ein Rahmen aufgebaut, wobei der Rahmen die Mattscheibe 40 aufnimmt. Die Lampen und/oder die modulförmigen Lampenanordnungen 20 scheinen durch die Mattscheibe 40 in der rahmenförmigen Tür 30 hindurch.

Um die typische Größe einer Oberflächenkontroll- oder Farbabmusterungsleuchte 100 darzustellen, ist in Figur 1 neben der Oberflächenkontroll- oder Farbabmusterungsleuchte 100 die Silhouette eines erwachsenen Menschen gezeigt. Die Mattscheibe 40 weist typischerweise eine Breite zwischen 40 cm und 1 m auf. Die Höhe der Mattscheibe 40 beträgt zwischen 1,20 m und 2,00 m. Um die Oberflächenkontrollleichte zu kühlen, können Kühlgebläse 50 in den Seiten 11 und 12 des kastenförmigen Behälters vorhanden sein, von denen hier in dieser Skizze nur die Lüftungsschlitze zu sehen sind.

Damit diese Oberflächenkontroll- oder Farbabmusterungsleuchte 100 in einer industriellen Fertigungshalle genutzt werden kann, ist es notwendig, dass die Mattscheibe 40 vor Bruch geschützt wird, so dass keine Scherben auf sich in der Nähe befindliche Menschen fallen können. Da diese Oberflächenkontrolllampen typischerweise in einem Beleuchtungstunnel nicht nur an der Wand, sondern auch an der Decke montiert werden, ist diese Sicherheitsmaßnahme erforderlich.

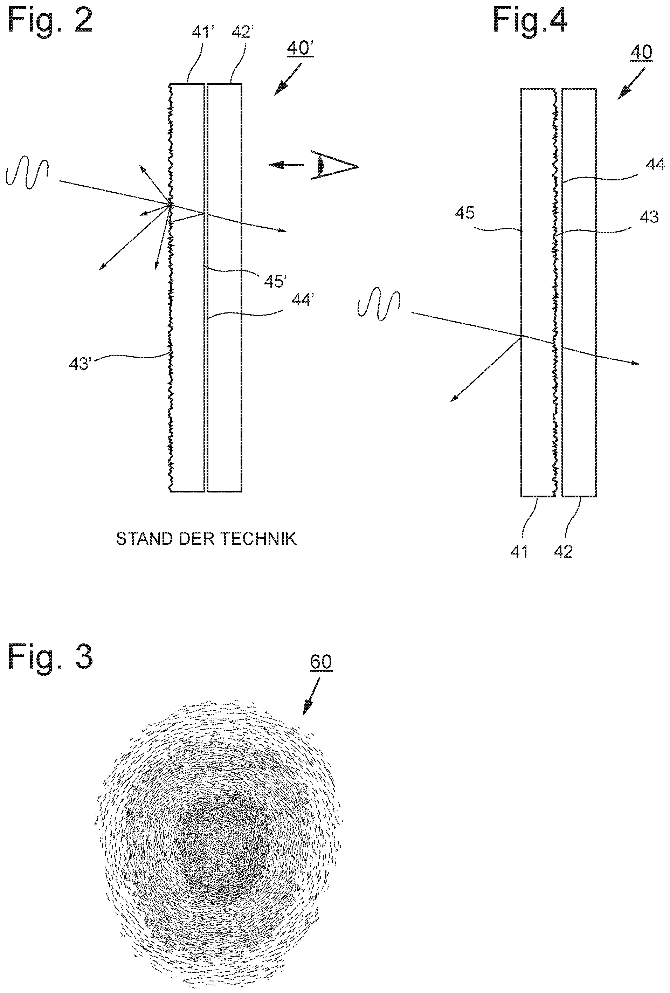

In **Figur 2** eine Mattscheibenanordnung aus dem STAND DER TECHNIK, dargestellt. Diese Mattscheibenanordnung besteht aus einer ersten Scheibe 41', im Bild links und aus einer zweiten Scheibe 42' im Bild rechts. Lampen zur Ausleuchtung der Mattscheibe 40' befinden sich links von dieser Mattscheibenanordnung. Von links kommendes Licht, hier als Welle dargestellt, trifft auf die mattierte Oberfläche 43' der ersten Scheibe 41' auf und wird dort zum Teil reflektiert und zum Teil dringt das Licht durch die Mattscheibe 40'. Die mattierte Oberfläche 43' der ersten Scheibe 41' nimmt dem Licht eine mögliche Polarisation und lenkt das Licht in viele unterschiedliche Richtungen durch diese erste Scheibe 41'. Um diese erste, linke Scheibe 4' vor Bersten zu schützen, aber auch, um die in der Regel eher dünne mattierte Scheibe zu schützen, ist eine zweite Scheibe 42', hier auf der rechten Seite, vorgesehen. Berühren sich die beiden nicht mattierten Seiten der Scheiben 41' und 42', so kann es zu unerwünschten optischen Phänomenen der Newton'schen Ringe kommen. Dieser Effekt tritt um so deutlicher auf, je sauberer und partikelfreier die beiden, einander berührenden Scheiben 41' und 42' sind. Die Newton'schen Ringe rühren von sehr feinen Unebenheiten der Scheibenoberflächen her, aber auch von eingeschlossener Luft, welche Verhindert, dass sich die Scheiben 41', 42' nahtlos aneinanderlegen. In Folge dessen bilden sich zwischen den beiden einander berührenden Scheiben 41' und 42' Spalte mit einer Breite im Nanometerbereich. Zwischen einer Scheibenberührung und der größten Spaltbreite variiert die Spaltbreite. Licht, dass durch den Spalt zwischen den Scheiben 41' und 42' dringt, erfährt, je nach eigener Wellenlänge, eine teilweise Rückreflexion an der Phasengrenze zwischen Glas und Luft.

Finden zwei Rückreflexionen in räumlich unterschiedlicher Entfernung im nanometer-Bereich statt, so können sich die rückreflektierten Lichtstrahlen durch Interferenz zum Teil auslöschen. Dieser Effekt zeigt sich auf der gegenüberliegenden Seite, also zu beiden Seiten dieses optischen Phänomens. Da die Spaltbreite variiert, findet die teilweise Auslöschung für Licht unterschiedlicher Wellenlänge statt. Da Spalte zwischen zwei Scheiben 41' und 42' häufig linsenförmig ausgestaltet sind, bilden sich kreisförmige Ringe mit unterschiedlichen Farben. Diese Farbringe, nach seinem ersten Entdecker auch Newton'sche Ringe genannt, können die Gleichmäßigkeit der weißen Farbe in der Oberflächenkontroll- oder Farbabmusterungsleuchte 100 stören und unerwünschte farbige Flecken verursachen.

In **Figur 3** ist das Phänomen der beobachtbaren Newton'schen Ringe etwa in Originalgröße dargestellt. Unterschiedlicher Punktdichten in Schwarz/Weiß stehen für unterschiedliche Spektralfarben. Diese Spektralfarben reichen von einem dunklen Blau über Grün und Magenta bis hin zu einem Rosa.

In **Figur 4** ist die Anordnung von der ersten Scheibe 41 mit mattierter Oberfläche 43 und der zweiten Scheibe 42 ohne mattierte Oberfläche gezeigt. Die beiden Scheiben 41 und 42 berühren einander so, dass die mattierte Oberfläche 43 die zweite Scheibe 42 berührt. Zur Innenseite des kastenförmigen Behälters 10 weist die erste Scheibe 41 eine glatte, nicht mattierte Klarsichtseite 45 auf. Überraschenderweise hat sich herausgestellt, dass diese Anordnung, obwohl die Rückreflexion an der glatten, nicht mattierten Seite 45, der Klarsichtseite, größer sein sollte, zu einem geringeren Lichtverlust durch Rückreflexion führt als eine Anordnung, in der sich beide Scheiben 41 und 42 mit der klaren, nicht mattierten Oberfläche 44 und 45 berühren. Dieser Unterschied macht etwa 5% des Lichtes aus. In einer Oberflächenkontroll- oder Farbabmusterungsleuchte ist man um jedes kleine Mehr an Licht bemüht, da die Oberflächenkontrollleuchten in großer Anzahl in längeren Oberflächenkontrolltunneln einem Fahrzeugwerk eingesetzt werden. Bei einem Oberflächenkontrolltunnel von 270 m Länge kann durch die erhöhte Lichtausbeute eine entsprechend geringere Ansteuerung eingestellt werden, die weniger Wärme erzeugt. Wird weniger Wärme erzeugt, ist auch eine geringere Klimatisierung notwendig. Sowohl die Wärme, als auch die laute Klimatisierung, die mit einem ständigen Luftzug einhergeht, stellt für Nuanceure zur Farbabmusterung und Ingenieure zur Oberflächenkontrolle auf Dauer eine Belastung am Arbeitsplatz dar.

Die mattierte Oberfläche 43 der ersten Scheibe 41 weist in vorteilhafter Weise einen Mittenrauwert Rₐ von weniger als 1 µm auf. Zur Mattierung ist es auch möglich, mit groben Mattscheiben zu arbeiten. Diese aber erzeugen sichtbare Reflexe und Spitzlichter. Trotz der erhöhten mechanischen Empfindlichkeit von fein mattierten Oberflächen und der Empfindlichkeit gegenüber Verschmutzung, wie Insekteneintrag, Staub und Kondensation von Ölen hat sich diese Feinmattierung bewährt.

### BEZUGSZEICHENLISTE

| | | | |
|---|---|---|---|
| 10 | Behälter | 43 | Oberfläche, mattiert |
| 11 | Seite | 43' | Oberfläche, mattiert |
| 12 | Seite | 44 | Oberfläche, nicht mattiert |
| 20 | Lampenanordnung | 44' | Oberfläche, mattiert |
| 30 | Tür | 45 | Klarsichtseite |
| 40 | Mattscheibe | 45' | Klarsichtseite |
| 40' | Mattscheibe | 50 | Kühlgebläse |
| 41 | Scheibe | 60 | Newton'sche Ringe |
| 41' | Scheibe | 100 | Oberflächenkontroll- oder Farbabmusterungsleuchte |
| 42 | Scheibe | | |
| 42' | Scheibe | | |

## Patentansprüche

1. Oberflächenkontroll- oder Farbabmusterungsleuchte (100) aufweisend,
- einen kastenförmigen Behälter (10) zur Aufnahme von Lampen und/oder modulförmigen Lampenanordnungen (20) als Gehäuseteil, wobei die Lampen und/oder die modulförmigen Lampenanordnungen (20) gleichmäßig in einer Fläche des kastenförmigen Behälters (10) angeordnet sind,
- eine rahmenförmige Tür (30), welche den kastenförmigen Behälter (10) verschließt, und eine Mattscheibe (40) aufnimmt, durch welche die Lampen und/oder modulförmigen Lampenanordnungen (20) hindurchscheinen,
**dadurch gekennzeichnet, dass**
die Mattscheibe (40) aus zwei aneinanderliegenden Scheiben (41, 42) besteht, wobei eine erste Scheibe (41) eine mattierte Oberfläche (43) aufweist, welche in Richtung der zweiten Scheibe (42) weist, wobei
die mattierte Oberfläche (43) der ersten Scheibe (41) eine nicht mattierte Oberfläche (44) der zweiten Scheibe (42) unmittelbar berührt, und wobei
die erste Scheibe (41) zur Innenseite des kastenförmigen Behälters (10) eine glatte, nicht mattierte Klarsichtseite (45) aufweist.

2. Oberflächenkontroll- oder Farbabmusterungsleuchte nach Anspruch 1,
**dadurch gekennzeichnet, dass**
die mattierte Oberfläche (43) der ersten Scheibe (41) einen Mittenrauwert Rₐ von weniger als 1 µm aufweist.

3. Oberflächenkontroll- oder Farbabmusterungsleuchte nach einem der Ansprüche 1 oder 2,
**dadurch gekennzeichnet, dass**
die Lampen und/oder modulförmigen Lampenanordnungen (20) in einer Entfernung von weniger als 20 cm, bevorzugt zwischen 10 cm und 20 cm hinter der Mattscheibe (40) angeordnet sind.

4. Oberflächenkontroll- oder Farbabmusterungsleuchte nach einem der Ansprüche 1 bis 3,
**dadurch gekennzeichnet, dass**
die Breite der Mattscheibe (40) zwischen 25 cm und 1 m aufweist und die Höhe der Mattscheibe (40) zwischen 0,5 m und 2 m aufweist.

5. Oberflächenkontroll- oder Farbabmusterungsleuchte nach einem der Ansprüche 1 bis 4,
**dadurch gekennzeichnet, dass**
von Lampen und/oder modulförmigen Lampenanordnungen (20) einen einstellbaren Weißpunkt zwischen 2.700 K und 6.500 K aufweisen.

6. Oberflächenkontroll- oder Farbabmusterungsleuchte nach einem der Ansprüche 1 bis 5,
**dadurch gekennzeichnet, dass**
ein Kühlgebläse (50) in den Seiten (11, 12) des kastenförmigen Behälters (10) angeordnet ist.

7. Oberflächenkontroll- oder Farbabmusterungsleuchte nach einem der Ansprüche 1 bis 6,
**dadurch gekennzeichnet, dass**
die rahmenförmige Tür (30) ohne äußerlich erkennbaren Verschluss ausgebildet ist.

8. Oberflächenkontroll- oder Farbabmusterungsleuchte nach einem der Ansprüche 1 bis 6,
**dadurch gekennzeichnet, dass**
die Lampen und/oder die modulförmigen Lampenanordnungen (20) LED sind.

## Claims

1. A surface control or color matching light (100) comprising
- a box-shaped container (10) for receiving lamps and/or modular lamp arrangements (20) as a housing part, wherein the lamps and/or the modular lamp arrangements (20) are arranged uniformly in a surface of the box-shaped container (10),
- a frame-shaped door (30) which closes the box-shaped container (10) and receives a frosted glass pane (40) through which the lamps and/or the modular lamp arrangements (20) shine,
**characterized in that**
the frosted glass pane (40) consists of two adjoining panes (41, 42), wherein a first pane (41) has a frosted surface (43) which is oriented toward the second pane (42), wherein
the frosted surface (43) of the first pane (41) directly contacts a non-frosted surface (44) of the second pane (42), and wherein
the first pane (41) has a smooth, non-frosted clear view side (45) facing the inside of the box-shaped container (10).

2. The surface control or color matching light according to claim 1,
**characterized in that**
the frosted surface (43) of the first pane (41) has an average roughness value Rₐ of less than 1 µm.

3. The surface control or color matching light according to one of the claims 1 or 2,
**characterized in that the**
the lamps and/or the modular lamp arrangements (20) are arranged at a distance of less than 20 cm, preferably between 10 cm and 20 cm, behind the frosted glass pane (40).

4. The surface control or color matching light according to one of the claims 1 to 3,
**characterized in that**
the width of the frosted glass pane (40) is between 25 cm and 1 m and the height of the frosted glass pane (40) is between 0.5 m and 2 m.

5. The surface control or color matching light according to one of the claims 1 to 4,
**characterized in that**
the lamps and/or the modular lamp arrangements (20) have an adjustable white point between 2,700 and 6,500 K.

6. The surface control or color matching light according to one of the claims 1 to 5,
**characterized in that**
a cooling fan (50) is arranged in the sides (11, 12) of the box-shaped container (10).

7. The surface control or color matching light according to one of the claims 1 to 6,
**characterized in that**
the frame-shaped door (30) is formed without an externally visible lock.

8. The surface control or color matching light according to one of the claims 1 to 6,
**characterized in that**
the lamps and/or the modular lamp arrangements (20) are LEDs.

## Revendications

1. Luminaire de contrôle de surface ou d'évaluation des couleurs (100) comportant
- un contenant en forme de boîte (10) destiné à recevoir des lampes et/ou des agencements de lampes modulaires (20) en tant que partie de boîtier, où les lampes et/ou les agencements de lampes modulaires (20) sont agencés de manière régulière dans une surface du contenant en forme de boîte (10),
- une porte en forme de cadre (30) qui ferme le contenant en forme de boîte (10) et reçoit une vitre dépolie (40) à travers laquelle brillent les lampes et/ou les agencements de lampes modulaires (20),
**caractérisé en ce que**
la vitre dépolie (40) est constituée de deux vitres juxtaposées (41, 42), où une première vitre (41) présente une surface dépolie (43) qui est orientée vers la deuxième vitre (42), où
la surface dépolie (43) de la première vitre (41) est en contact direct avec une surface non dépolie (44) de la deuxième vitre (42), et où
la première vitre (41) présente, vers l'intérieur du contenant en forme de boîte (10), un côté transparent lisse non dépoli (45).

2. Luminaire de contrôle de surface ou d'évaluation des couleurs selon la revendication 1,
**caractérisé en ce que**
la surface dépolie (43) de la première vitre (41) présente une rugosité moyenne Rₐ inférieure à 1 µm.

3. Luminaire de contrôle de surface ou d'évaluation des couleurs selon l'une des revendications 1 ou 2,
**caractérisé en ce que**
les lampes et/ou les agencements de lampes modulaires (20) sont agencés à une distance inférieure à 20 cm, de préférence entre 10 cm et 20 cm, derrière la vitre dépolie (40).

4. Luminaire de contrôle de surface ou d'évaluation des couleurs selon l'une des revendications 1 à 3,
**caractérisé en ce que**
la largeur de la vitre dépolie (40) est comprise entre 25 cm et 1 m et la hauteur de la vitre dépolie (40) est comprise entre 0,5 m et 2 m.

5. Luminaire de contrôle de surface ou d'évaluation des couleurs selon l'une des revendications 1 à 4,
**caractérisé en ce que**
les lampes et/ou les agencements de lampes modulaires (20) présentent un point blanc réglable entre 2 700 et 6 500 K.

6. Luminaire de contrôle de surface ou d'évaluation des couleurs selon l'une des revendications 1 à 5,
**caractérisé en ce qu'**
un ventilateur de refroidissement (50) est agencé dans les côtés (11, 12) du contenant en forme de boîte (10).

7. Luminaire de contrôle de surface ou d'évaluation des couleurs selon l'une des revendications 1 à 6,
**caractérisé en ce que**
la porte en forme de cadre (30) est formée sans fermeture visible de l'extérieur.

8. Luminaire de contrôle de surface ou d'évaluation des couleurs selon l'une des revendications 1 à 6,
**caractérisé en ce que**
les lampes et/ou les dispositifs de lampes modulaires (20) sont des LED.
